# EUROPEAN PATENT APPLICATION

(11) **EP 4 617 764 A1**
(43) Date of publication of application: **17.09.2025**
(21) Application number: 23894994.5
(22) Date of filing: 21.11.2023
(51) Int. Cl.: G02B 27/01

(54) **VEHICLE IMAGING DEVICE HAVING REDUCED VOLUME**

(30) Priority: 23.11.2022 KR 20220158641
(71) Applicant: LG Electronics Inc., Yeongdeungpo-gu Seoul 07336 (KR)
(72) Inventor: LEE, Sangil, Seoul 06772 (KR); CHOI, Taehyeok, Seoul 06772 (KR); LEE, Kyoungil, Seoul 06772 (KR); LEE, Seunggyu, Seoul 06772 (KR)
(74) Representative: Schott, Jakob Valentin
(86) International application number: PCT/KR2023/018767
(87) International publication number: WO 2024/112066

(57) **Abstract**

A vehicle imaging device comprises: a mirror which is disposed inside the dashboard of a vehicle and formed to reflect optical signals inside the dashboard; an image forming device which is disposed inside the dashboard and generates the optical signals on one side; a cover which forms the exterior of the dashboard and includes a first surface and a second surface that selectively reflects or transmits the optical signals depending on the polarization component of the optical signals; and a second mirror which is disposed between the windshield of the vehicle and the cover and formed to reflect the optical signals that have passed through the cover, the second mirror reflecting the optical signals to the first surface of the cover so that the optical signals travel toward a first area of the windshield.

## Description

### Technical Field

This specification relates to a vehicle imaging device. One or more embodiments relate to a vehicle imaging device having a reduced volume and a vehicle including the same.

### Background Art

A vehicle is an apparatus capable of being moved in a desired direction by a user who is on board. A representative example of a vehicle may be an automobile.

For convenience of a user using a vehicle, various types of sensors and electronic devices are arranged in the vehicle. In particular, for the convenience of the user's driving, research on an advanced driver assistance system (ADAS) is being actively carried out. In addition, an autonomous vehicle is actively under development.

In some embodiments, a vehicle display that shows various driving information related to a vehicle may be located below a driver's forward visual field for driving, which affects driving safety (rubbernecking). Therefore, a vehicle imaging device, such as a head-up display (HUD), may be mounted on a vehicle to enhance driving safety by projecting an image on a windshield at the front of the vehicle, positioned close to the driver's line of sight while driving.

The HUD may be implemented with a large screen while using augmented reality (AR) to display driving-related information. Due to a limited mounting space of such a large-screen AR-HUD, a product with a reduced volume (10L or less) and a large screen (at least 10X4 degrees of FOV) may be required. However, there is a problem that it is difficult to implement a vehicle imaging device, such as AR-HUD, with a reduced volume (10L or less) in a product that has a large screen of at least a certain size (at least 10X4 degrees of FOV).

### Disclosure of Invention

### Technical Problem

One aspect of the specification is to provide a vehicle imaging device with a reduced volume and a vehicle including the same.

Another aspect of the specification is to provide a vehicle imaging device that guarantees a field of view (FOV) of at least a certain angle with a reduced volume due to a limited mounting space of a large-screen AR-HUD.

Another aspect of the specification is to provide a vehicle imaging device that provides different AR images within a user's FOV by reflecting the different AR images through different regions of a windshield using a plurality of mirrors.

Another aspect of this specification is to implement continuous images related to driving-related information to have a large aspect ratio by using a single image module.

The tasks to be solved in the disclosure may not be limited to the aforementioned, and other problems to be solved by the disclosure will be obviously understood by a person skilled in the art based on the following description.

### Solution to Problem

In order to achieve those aspects and other advantages, there is provided a vehicle imaging device including: a mirror arranged inside a dashboard of a vehicle, and configured to reflect an optical signal inside the dashboard; a picture generation unit (PGU) arranged inside the dashboard and configured to generate the optical signal to one side; a cover forming appearance of the dashboard and including a first surface and a second surface selectively reflecting or transmitting the optical signal depending on a polarization component of the optical signal; and a second mirror arranged between the windshield of the vehicle and the cover, and configured to reflect an optical signal transmitted through the cover to the first surface of the cover so that the optical signal is directed to a first region of the windshield.

In an embodiment, the mirror may include: a plane mirror formed on the PGU and having a flat surface formed to reflect the optical signal reflected from the first surface of the cover; and a phase retarder formed on a first surface of the plane mirror and configured to retard a phase of a polarization component of the optical signal.

In an embodiment, the second mirror may include: a concave mirror having a surface formed concavely to reflect the optical signal transmitted through the first surface of the mirror; and a second phase retarder formed on a first surface of the concave mirror and configured to retard a phase of a polarization component of the optical signal within a predetermined range with respect to 90 degrees.

In an embodiment, the cover may include: a first polarization film arranged on the first surface and configured to selectively transmit or reflect the optical signal according to the polarization component of the optical signal; and a second polarization film arranged on the second surface configured to selectively transmit or reflect the optical signal according to the polarization component of the optical signal. A first polarization component emitted from the PGU may be reflected from the first polarization film and converted into a second polarization component in the phase retarder and the plane mirror. The second polarization component may be transmitted through the first polarization film and the second polarization film and converted into the first polarization component in the second phase retarder and the concave mirror. The first polarization component converted in the second phase retarder and the concave mirror may be reflected from the second polarization film to be directed toward the windshield.

In an embodiment, the mirror may be formed at a first inclination angle with respect to a horizontal plane, the second mirror may be formed at a second inclination angle with respect to the horizontal plane, and the PGU may be formed at a certain inclination angle with respect to the horizontal plane. The second inclination angle may be formed greater than the first inclination. The inclination angle of the PGU may be set to a value greater than the first inclination angle and the second inclination angle. The first inclination angle, the second inclination angle, and the inclination angle of the PGU may have values smaller than 90 degrees.

In an embodiment, the cover may be adjustable to suppress sunlight from entering depending on an angle of the windshield and a location of a driver's eye box region of the vehicle. An inclination angle of the cover may be formed to have a value greater than the first inclination angle and smaller than the second inclination angle.

In an embodiment, the windshield may be formed with different curvatures for each region such that the optical signal, which has been reflected from the second phase retarder of the second mirror and reflected from the first surface of the cover, is reflected into the eye box region of the driver of the vehicle to allow the driver to see a virtual image, The optical signal reflected from first and second points of the windshield may be formed at third and fourth points of the eye box. A first vertical distance between the first point and the second point may be formed to be greater than a second vertical distance between the third point and the fourth point.

In an embodiment, the device may further include a motor operably coupled to the plane mirror and configured to adjust the first inclination angle between the plane mirror and the horizontal plane. The device may further include a motor operably coupled to the plane mirror and configured to adjust the first inclination angle between the plane mirror and the horizontal plane.

In an embodiment, the device may further include a third mirror arranged between the mirror and the second mirror and configured to reflect a second optical signal to be directed toward a second region of the windshield. The third mirror may be formed at a third inclination angle with respect to the horizontal plane. The third inclination angle may have a value greater than 90 degrees.

In an embodiment, the second optical signal reflected from fifth and sixth points of the windshield may be formed at the third and fourth points of the eye box. The fifth point may be formed between the first point and the second point, and the sixth point may be formed lower than the second point. A third vertical distance between the fifth point and the sixth point may be formed to be smaller than the first vertical distance between the first point and the second point.

In an embodiment, the PGU may emit the second optical signal through a fourth region while emitting the optical signal through a third region. The optical signal may be reflected from the mirror and the second mirror to be incident on the first region of the windshield. The optical signal may be reflected from the mirror and the second mirror to be incident on the first region of the windshield.

In an embodiment, the third mirror may include: a second concave mirror having a concave surface formed to reflect the second optical signal; and a third phase retarder formed on a first surface of the second concave mirror and configured to retard a phase of a polarization component of the second optical signal. The optical signal may be emitted with a first polarization component in the third region of the PGU. The second optical signal may be emitted with a second polarization component in the fourth region of the PGU. The second optical signal of the second polarization component may be converted into the first polarization component in the third phase retarder and the second concave mirror. The converted first polarization component may be transmitted through the first polarization film and the second polarization film and directed toward the windshield.

In an embodiment, a first curvature of the concave mirror may be determined according to an FOV and a first magnification of a first virtual image displayed in the eye box region. A second curvature of the second concave mirror may be determined differently from the first curvature depending on a second magnification of a second virtual image displayed in the eye box region.

In an embodiment, the first virtual image may display a first image and first information associated with turn signal and inter-vehicle distance display in an augmented reality (AR) imaging. The second virtual image may display a second image and second information associated with an indicator of a speed shown on a cluster of the vehicle.

In an embodiment, the vehicle imaging device may further include a second motor operably coupled to the second concave mirror and configured to adjust the third inclination angle between the second concave mirror and the horizontal plane. The third inclination angle may be adjusted by the second motor to change vertical positions of the third point and the fourth point, and adjust a vertical FOV height of the eye box region.

A vehicle according to another aspect of the specification includes: a windshield arranged on a front surface of the vehicle; and a vehicle imaging device arranged inside a dashboard of the vehicle and between the windshield and the dashboard. The vehicle imaging device includes: a mirror arranged inside a dashboard of a vehicle, and configured to reflect an optical signal inside the dashboard; a picture generation unit (PGU) arranged inside the dashboard and configured to generate the optical signal to one side; a cover forming appearance of the dashboard and including a first surface and a second surface selectively reflecting or transmitting the optical signal depending on a polarization component of the optical signal; and a second mirror arranged between the windshield of the vehicle and the cover, and configured to reflect an optical signal transmitted through the cover to the first surface of the cover so that the optical signal is directed to a first region of the windshield.

In an embodiment, the mirror may include: a plane mirror formed on the PGU and having a flat surface formed to reflect the optical signal reflected from the first surface of the cover; and a phase retarder formed on a first surface of the plane mirror and configured to retard a phase of a polarization component of the optical signal.

In an embodiment, the second mirror may include: a concave mirror having a surface formed concavely to reflect the optical signal transmitted through the first surface of the mirror; and a second phase retarder formed on a first surface of the concave mirror and configured to retard a phase of a polarization component of the optical signal within a predetermined range with respect to 90 degrees.

In an embodiment, the cover may include: a first polarization film arranged on the first surface and configured to selectively transmit or reflect the optical signal according to the polarization component of the optical signal; and a second polarization film arranged on the second surface configured to selectively transmit or reflect the optical signal according to the polarization component of the optical signal. A first polarization component emitted from the PGU may be reflected from the first polarization film and converted into a second polarization component by the phase retarder and the plane mirror. The second polarization component may be transmitted through the first polarization film and the second polarization film and converted into the first polarization component in the second phase retarder and the concave mirror. The first polarization component converted in the second phase retarder and the concave mirror may be reflected from the second polarization film to be directed toward the windshield.

In an embodiment, the cover may include: a first polarization film arranged on the first surface and configured to selectively transmit or reflect the optical signal according to the polarization component of the optical signal; and a second polarization film arranged on the second surface configured to selectively transmit or reflect the optical signal according to the polarization component of the optical signal. A first polarization component emitted from the PGU may be reflected from the first polarization film and converted into a second polarization component by the phase retarder and the plane mirror. The second polarization component may be transmitted through the first polarization film and the second polarization film and converted into the first polarization component in the second phase retarder and the concave mirror. The first polarization component converted in the second phase retarder and the concave mirror may be reflected from the second polarization film to be directed toward the windshield.

In an embodiment, the device may further include a third mirror arranged between the mirror and the second mirror and configured to reflect a second optical signal to be directed toward a second region of the windshield. The third mirror may be formed at a third inclination angle with respect to the horizontal plane. The third inclination angle may have a value greater than 90 degrees.

In an embodiment, the third mirror may include: a second concave mirror having a concave surface formed to reflect the second optical signal; and a third phase retarder formed on a first surface of the second concave mirror and configured to retard a phase of a polarization component of the second optical signal. The optical signal may be emitted with a first polarization component in the third region of the PGU. The second optical signal may be emitted with a second polarization component in the fourth region of the PGU. The second optical signal of the second polarization component may be converted into the first polarization component in the third phase retarder and the second concave mirror. The converted first polarization component may be transmitted through the first polarization film and the second polarization film and directed toward the windshield. A first curvature of the concave mirror may be determined according to an FOV and a first magnification of a first virtual image displayed in the eye box region. A second curvature of the second concave mirror may be determined differently from the first curvature depending on a second magnification of a second virtual image displayed in the eye box region.

Details of other embodiments are included in the detailed description and drawings.

### Advantageous Effects of Invention

The technical features of a vehicle imaging device having a reduced volume and a vehicle including the same according to the specification will be summarized as follows.

According to the specification, a vehicle imaging device with reduced volume may be implemented by optimally arranging a picture generation unit (PGU) and a mirror inside a cover of a dashboard and optimally arranging a second mirror outside the cover.

According to the specification, a vehicle imaging device that guarantees a field of view (FOV) of at least a certain angle while having a reduced volume according to a limited mounting space of a large-screen AR-HUD may be implemented by configuring a cover to reflect or transmit an optical signal.

According to the specification, a vehicle imaging device that ensures a field of view (FOV) of at least a certain angle while having a reduced volume according to a limited mounting space of a large-screen AR-HUD may be implemented by attaching a polarization film to at least one surface of a cover.

According to the specification, a vehicle imaging device may be implemented that provides different AR images within a user's FOV by reflecting the different AR images through different regions of a windshield using a plurality of mirrors.

According to the specification, a vehicle imaging device may be implemented such that continuous images related to driving-related information have a large aspect ratio by using a single image module.

According to the specification, a volume reduction effect may be maximized through a multi-selective reflection/transmission optical system using a cover which is used for suppressing an introduction of foreign substances.

According to the specification, the degree of freedom in volume occupied by mirrors when the mirrors are installed inside a vehicle may be secured as a height from the bottom of a first mirror to the top of a second mirror is reduced.

According to the specification, a vehicle imaging device that has a volume reduction effect of at least 40% compared to large-screen AR-HUDs on the market may be implemented.

According to the specification, a vehicle imaging device that may be implemented as an AR-HUD having a volume of about 9 L or less within a vehicle may be provided.

The effects of the disclosure are not limited to those effects mentioned above, and other effects not mentioned may be clearly understood by those skilled in the art from the description of the appended claims.

### Brief Description of Drawings

FIG. 1 is a view illustrating appearance of a vehicle according to an embodiment.
FIG. 2 is a diagram illustrating the appearance of the vehicle at various angles.
FIGS. 3 and 4 are diagrams illustrating an inside of a vehicle according to an embodiment.
FIG. 5 is a block diagram illustrating a vehicle according to an embodiment.
FIG. 6A is a view of a configuration in which a screen of a certain ratio is formed in a specific region of front glass of a vehicle.
FIG. 6B is a view of a structure in which a vehicle imaging device for creating the screen of the certain ratio of FIG. 6A is arranged inside a dashboard of the vehicle.
FIG. 7 is a view of a vehicle imaging device according to an embodiment.
FIG. 8 is a cross-sectional view of the vehicle imaging device of FIG. 7.
FIG. 9 is a view of a structure in which an optical signal is reflected and transmitted through a specific region of a windshield in the vehicle imaging device of FIG. 7.
FIG. 10 is a view of polarization components in a phase retarder attached to a plane mirror of FIG. 8 and a second phase retarder attached to a concave mirror of a second mirror.
FIG. 11 is a view of a vehicle imaging device according to an embodiment.
FIG. 12 is a cross-sectional view of the vehicle imaging device of FIG. 11.
FIG. 13 is a cross-sectional view of a vehicle imaging device having a structure in which two mirrors are arranged in a lower region of a cover.
FIG. 14 is a view of the vehicle imaging device having the structure in which the two mirrors are arranged in the lower region of the cover, in relation to FIG. 13.
FIG. 15 is a block diagram of a vehicle having a vehicle imaging device according to the specification.

### Mode for the Invention

A description will now be given in detail according to one or more embodiments disclosed herein, with reference to the accompanying drawings, and regardless of reference numerals, the same or similar components are given the same reference number, and descriptions thereof will be omitted. The terms "module" and "unit" as used herein interchangeably or individually used to refer to a constituent element only for convenience in description in the specification and therefore are not themselves intended to take on different meanings or to depict different functions. In describing one or more embodiments disclosed herein, a detailed description of a related well-known technology will be omitted when it is determined that it would obscure the gist of the disclosure. The accompanying drawings are used to help easily understand the technical idea of the disclosure and it should be understood that the idea of the disclosure is not limited by the accompanying drawings. The idea of the disclosure should be construed to extend to any alterations, equivalents and substitutes besides the accompanying drawings.

It will be understood that although the terms first, second, etc. may be used herein to describe various elements, these elements should not be limited by these terms. The terms are used merely for the purpose of distinguishing one element from another.

It will be understood that when an element is referred to as being "connected with" another element, the element may be connected with the another element or intervening elements may also be present. In contrast, when a component is referred to as being "directly connected to" or "directly coupled to" another component, it should be understood that there are no intervening components present.

As used herein, the singular form is intended to include the plural forms as well, unless otherwise specified in context.

Terms such as "include" or "has" as used herein should be understood that they are intended to indicate an existence of several components, functions or steps, disclosed in the specification, and it is also understood that greater or fewer components, functions, or steps may likewise be utilized.

A vehicle according to an embodiment of the disclosure may be understood as a conception including automobiles, motorcycles, and the like. Hereinafter, the vehicle will be described based on a car.

The vehicle according to the embodiment of the present disclosure may be a conception including all of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

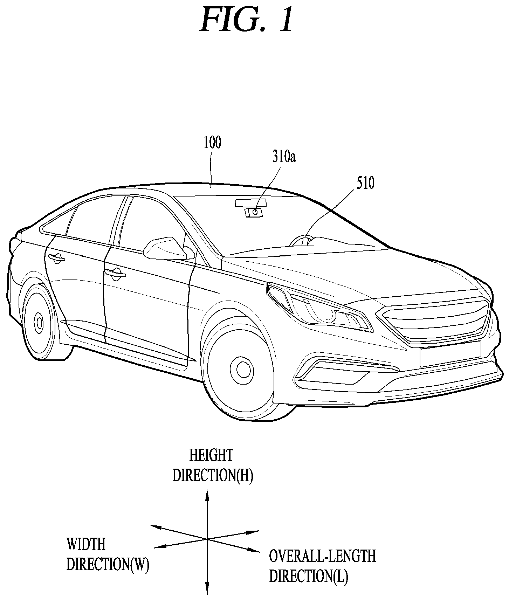

FIG. 1 is a view illustrating appearance of a vehicle according to an embodiment.

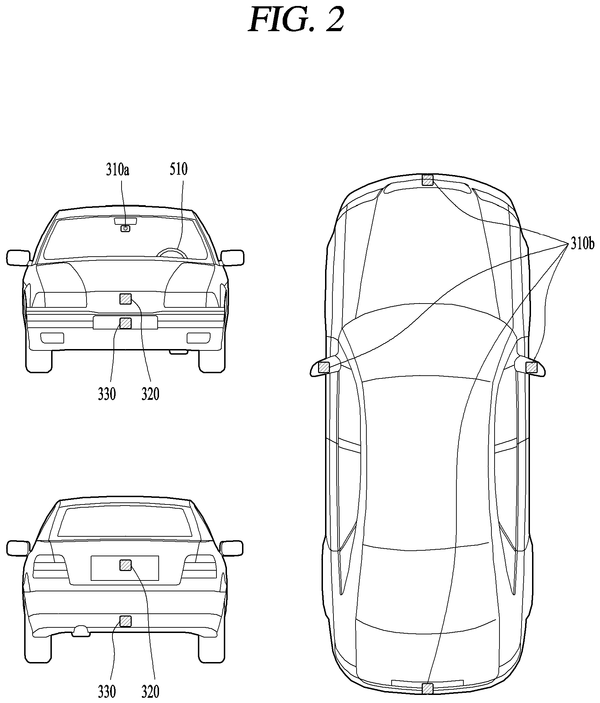

FIG. 2 is a diagram illustrating the appearance of the vehicle at various angles.

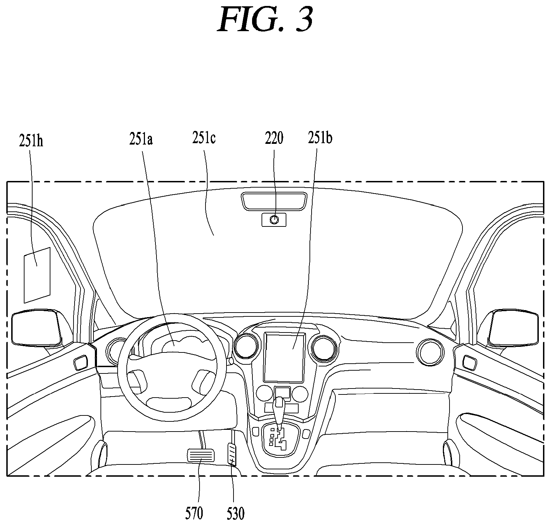

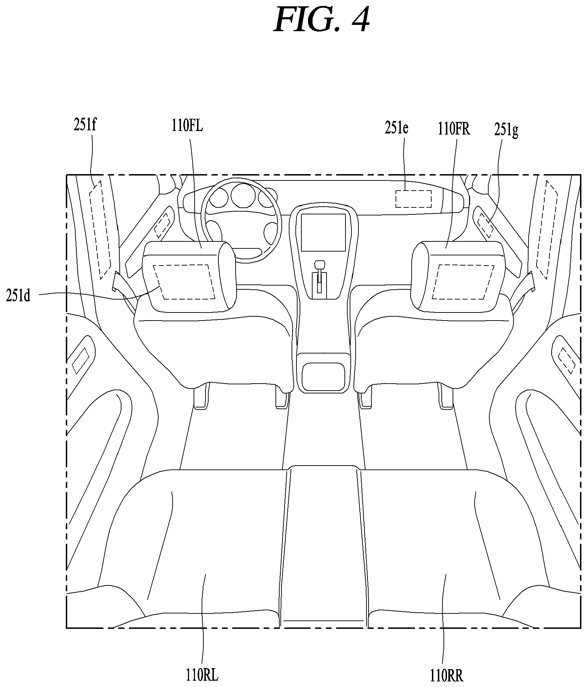

FIGS. 3 and 4 are diagrams illustrating an inside of a vehicle according to an embodiment.

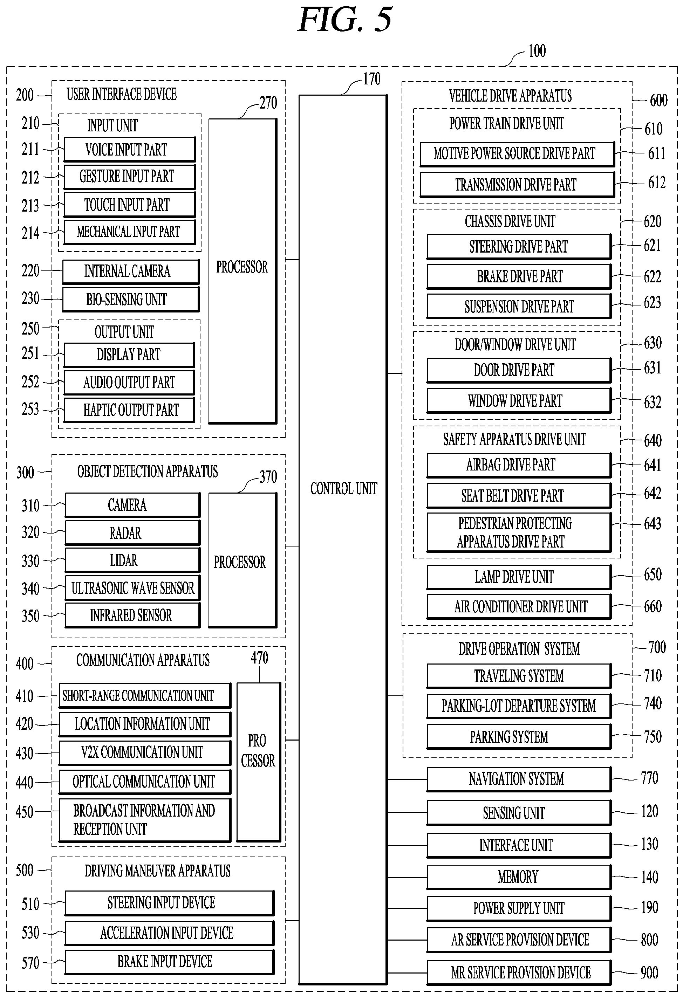

FIG. 5 is a block diagram illustrating a vehicle according to an embodiment.

As illustrated in FIGS. 1 to 5, a vehicle 100 may include wheels rotating by a power source, and a steering input apparatus 510 for adjusting a driving (ongoing, moving) direction of the vehicle 100.

The vehicle 100 may be an autonomous vehicle.

The vehicle 100 may be switched into an autonomous mode or a manual mode based on a user input.

For example, the vehicle 100 may be converted from the manual mode into the autonomous mode or from the autonomous mode into the manual mode based on a user input received through a user interface device 200.

The vehicle 100 may be switched into the autonomous mode or the manual mode based on traveling situation information. The traveling situation information may be generated based on object information provided from an object detection device 300.

For example, the vehicle 100 may be switched from the manual mode into the autonomous mode or from the autonomous module into the manual mode based on traveling situation information generated in the object detection device 300.

In an example, the vehicle 100 may be switched from the manual mode into the autonomous mode or from the autonomous mode into the manual mode based on traveling situation information received through a communication device 400.

The vehicle 100 may switch from the manual mode into the autonomous mode or from the autonomous module into the manual mode based on information, data, or signal provided by an external device.

When the vehicle 100 is driven in the autonomous mode, the vehicle 100 may be driven based on a driving system 700.

For example, the autonomous vehicle 100 may be driven based on information, data, or signals that are generated by a traveling system 710, a parking-lot departure system 740, and a parking system 750.

When the vehicle 100 is driven in the manual mode, the autonomous vehicle 100 may receive a user input for driving through a driving operation device 500. The vehicle 100 may be driven based on the user input received through the driving operation device 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100

As illustrated in FIG. 5, the vehicle 100 may include a user interface device 200, an object detection device 300, a communication device 400, a driving operation device 500, a vehicle drive device 600, a driving system 700, a navigation system 770, a sensing unit 120, an interface unit 130, a memory 140, a controller 170, and a power supply unit 190.

According to embodiments the vehicle 100 may include more components in addition to components described herein or may not include some of those components described herein.

The user interface device 200 may be a device for communication between the vehicle 100 and a user. The user interface device 200 may receive a user input and provide information generated in the vehicle 100 to the user. The vehicle 200 may implement user interfaces (UIs) or user experiences (UXs) through the user interface device 200.

The user interface device 200 may include an input unit 210, an internal camera 220, a biometric sensing unit 230, an output unit 250 and a processor 270.

In some embodiments, the user interface device 200 may include more components in addition to components to be explained in this specification or may not include some of those components to be explained in this specification.

The input unit 200 may allow the user to input information. Data collected in the input unit 120 may be analyzed by the processor 270 and processed as a user's control command.

The input unit 200 may be disposed inside the vehicle. For example, the input unit 200 may be arranged in one region of a steering wheel, one region of an instrument panel, one region of a seat, one region of each pillar, one region of a door, one region of a center console, one region of a headlining, one region of a sun visor, one region of a windshield, one region of a window, or the like.

The input unit 200 may include a voice input part 211, a gesture input part 212, a touch input part 213, and a mechanical input part 214.

The audio input part 211 may convert a user's voice input into an electric signal. The converted electric signal may be provided to the processor 270 or the controller 170.

The audio input part 211 may include at least one microphone.

The gesture input part 212 may convert a user's gesture input into an electric signal. The converted electric signal may be provided to the processor 270 or the controller 170.

The gesture input part 212 may include at least one of an infrared sensor and an image sensor for detecting the user's gesture input.

According to embodiments, the gesture input part 212 may detect a user's three-dimensional (3D) gesture input. To this end, the gesture input part 212 may include a light emitting diode emitting a plurality of infrared rays, or a plurality of image sensors.

The gesture input part 212 may detect the user's 3D gesture input by a time of flight (TOF) method, a structured light method or a disparity method.

The touch input part 213 may convert the user's touch input into an electric signal. The converted electric signal may be provided to the processor 270 or the controller 170.

The touch input part 213 may include a touch sensor for detecting the user's touch input.

According to an embodiment, the touch input part 213 may be integrated with the display 251 so as to implement a touch screen. The touch screen may provide an input interface and an output interface between the vehicle 100 and the user.

The mechanical input part 214 may include at least one of a button, a dome switch, a jog wheel, and a jog switch. An electric signal generated by the mechanical input part 214 may be provided to the processor 270 or the controller 170.

The mechanical input part 214 may be arranged on a steering wheel, a center fascia, a center console, a cockpit module, a door, and the like.

The internal camera 220 may acquire an internal image of the vehicle. The processor 270 may detect a user's status from the image of the interior of the vehicle. The processor 270 may acquire information related to the user's gaze from the image of the interior of the vehicle. The processor 270 may detect the user's gesture from the image of the interior of the vehicle.

The biometric detection unit 230 may acquire the user's biometric information. The biometric detection unit 230 may include a sensor for detecting the user's biometric information and acquire fingerprint information and heart rate information regarding the user using the sensor. The biometric information may be used for user authentication.

The output unit 250 may generate an output related to a visual, auditory or tactile signal.

The output unit 250 may include at least one of a display 251, an audio output part 252, and a haptic output part 253.

The display 251 may output graphic objects corresponding to various types of information.

The display 251 may include at least one of a liquid crystal display (LCD), a thin film transistor-LCD (TFT LCD), an organic light-emitting diode (OLED), a flexible display, a three-dimensional (3D) display, and an e-ink display.

The display 251 may be inter-layered or integrated with a touch input part 213 to implement a touch screen.

The display 251 may be implemented as a head up display (HUD), a center information display (CID), a cluster, and/or a rear seat entertainment (RSE). When the display 251 is implemented as the HUD, the display 251 may be provided with a projection module and thus output information through an image which is projected onto a windshield or a window.

The display 251 may include a transparent display. The transparent display may be attached to the windshield or the window.

The transparent display may have a predetermined degree of transparency and may output a predetermined screen thereon. The transparent display may include at least one of a thin film electroluminescent (TFEL), a transparent organic light-emitting diode (OLED), a transparent liquid crystal display (LCD), a transmissive transparent display, or a transparent LED display. The transparent display may have adjustable transparency.

In some examples, the user interface device 200 may include a plurality of displays 251a to 251g.

The display 251 may be arranged in one region of the steering wheel, one region 521a, 251b, 251e of the instrument panel, one region 251d of the seat, one region 251f of each pillar, one region 251g of the door, one region of the center console, one region of the headlining, or one region of the sun visor, or implemented in one region 251c of the windshield or one region 251h of the window.

Driving-related information for a driver may be displayed in one region 251a, 251b of the instrument panel. A personal infotainment display may be implemented in one region 251e of the instrument panel by a vehicle imaging device for a passenger seated in a front passenger seat. A personal infotainment display may be implemented in one region 251d of the seat by a vehicle imaging device for rear seat entertainment (RSE).

The audio output part 252 may convert an electric signal provided by the processor 270 or the controller 170 into an audio signal and output the audio signal. To this end, the audio output part 252 may include at least one speaker.

The haptic output part 253 may generate a tactile output. For example, the haptic output part 253 may vibrate the steering wheel, a safety belt, a seat 110FL, 110FR, 110RL, 110RR such that the user can recognize such output.

The processor 270 may control an overall operation of each unit of the user interface device 200.

According to an embodiment, the user interface device 200 may include a plurality of processors 270 or may not include any processor 270.

When the processor 270 is not included in the user interface device 200, the user interface device 200 may operate according to a control of a processor of another device within the vehicle 100 or the controller 170.

In some embodiments, the user interface device 200 may be named a display device for vehicle.

The user interface device 200 may operate under the control of the controller 170.

The object detection device 300 is a device for detecting an object located outside the vehicle 100.

Examples of the object may include a variety of objects associated with driving (operation) of the vehicle 100.

In some embodiments, a vehicle imaging device according to this specification will be described. In some embodiments, a vehicle display that shows various driving information related to a vehicle may be located below a driver's forward visual field for driving, which affects driving safety (rubbernecking). Therefore, a vehicle imaging device, such as a head-up display (HUD), may be mounted on a vehicle to enhance driving safety by projecting an image on a windshield at the front of the vehicle, positioned close to the driver's line of sight while driving.

An infotainment device also needs to be installed in a passenger or rear seat of the vehicle to provide personal information and personal entertainment content. Therefore, there is a need for a vehicle imaging device that is capable of displaying driving-related information in a front region of a driver's seat of the vehicle or providing personal entertainment content in a front region of a passenger or rear seat of the vehicle.

To display such driving-related information or entertainment content in a specific region of the windshield at the front of the vehicle, the vehicle imaging device may need to have a large aspect ratio in which a width in one direction is a certain percentage greater than a length in another direction. However, there is a problem in that any position and any structure to provide the vehicle imaging device for constituting a screen with a large aspect ratio in the vehicle are not mentioned.

To solve these problems, an aspect of this specification is to provide a vehicle imaging device having a large aspect ratio using a projection optical system related to the vehicle. Another aspect of this specification is to display driving-related information on a screen having a large aspect ratio in a specific region of the windshield at the front of the vehicle. Still another aspect of this specification is to provide a vehicle imaging device having an optical structure and a special screen for allowing an image to have a large aspect ratio by using a single image module. Still another aspect of this specification is to implement continuous images related to driving-related information to have a large aspect ratio by using a single image module. Still another aspect of this specification is to provide a small and thin vehicle imaging device.

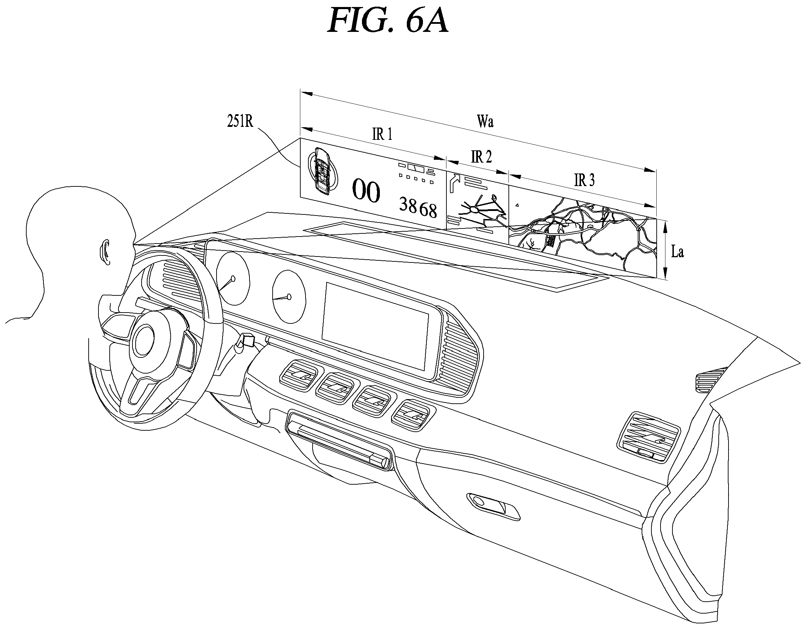

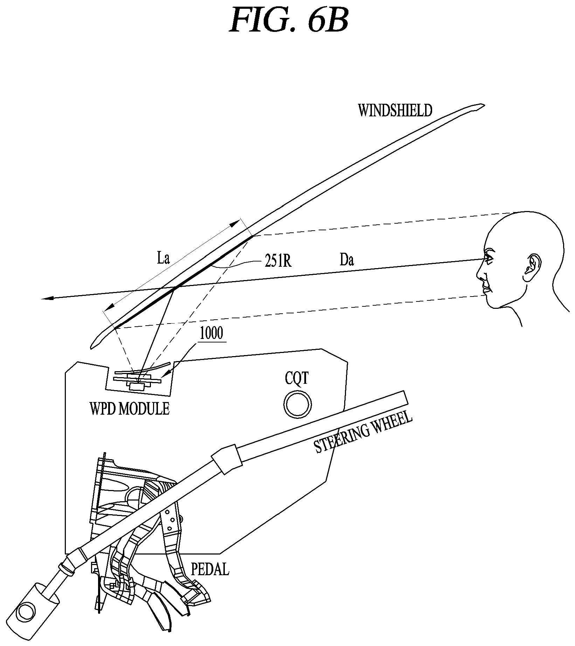

Hereinafter, a vehicle imaging device for achieving the aforementioned purposes will be described in detail with reference to the drawings. In this regard, FIG. 6A is a view of a configuration in which a screen of a certain ratio is formed in a specific region of front glass of a vehicle. FIG. 6B is a view of a structure in which a vehicle imaging device for creating the screen of the certain ratio of FIG. 6A is arranged inside a dashboard of the vehicle.

Referring to FIG. 6A, an image having a width Wa in one axial direction and a length La in another axial direction may be displayed in a specific region 251R of a windshield of a vehicle. The image may be configured to include a plurality of image regions displaying information necessary for driving the vehicle. The plurality of image regions may include a first image region IR1 to a third image region IR3. A first image including vehicle-related information may be displayed in the first image region IR1 closest to a driver's field of view (FOV) range in the vehicle. A second image associated with a vehicle driving path may be displayed in the second image region IR2. A third image associated with a map including an origin and a destination may be displayed in the third image region IR3. As the plurality of images are displayed in the specific region 251R, the width Wa in the one axial direction may be set to be longer than the length La in the another axial direction by a certain ratio, for example, at least 5 times.

Referring to FIGS. 6A and 6B, a vehicle imaging device 1000 may be arranged inside the dashboard of the vehicle. The vehicle imaging device 1000 may be arranged in a specific region inside the dashboard not to overlap a region where a steering wheel and pedals are arranged. An image by light, which is reflected from a screen panel 1200 constituting the vehicle imaging device 1000, may be displayed in the specific region 251R of the windshield of the vehicle. The specific region 251R may be implemented with a certain length La so that the image is displayed in the driver's FOV range. A distance from a center of the driver's gaze to a center of the specific region 251R may be determined as a certain distance Da.

Hereinafter, a vehicle imaging device according to this specification will be described. In some embodiments, a vehicle display that shows various driving information related to a vehicle may be located below a driver's forward visual field for driving, which affects driving safety (rubbernecking). Therefore, a vehicle imaging device, such as a head-up display (HUD), may be mounted on a vehicle to enhance driving safety by projecting an image on a windshield at the front of the vehicle, positioned close to the driver's line of sight while driving.

The HUD may be implemented with a large screen while using augmented reality (AR) to display driving-related information. Due to a limited mounting space of such a large-screen AR-HUD, a product with a reduced volume (10L or less) and a large screen (at least 10X4 degrees of FOV) may be required. However, there is a problem that it is difficult to implement a vehicle imaging device, such as AR-HUD, with a reduced volume (10L or less) in a product that has a large screen of at least a certain size (at least 10X4 degrees of FOV).

To overcome those problems, one aspect of the specification is to provide a vehicle imaging device with a reduced volume and a vehicle including the same. Another aspect of the specification is to provide a vehicle imaging device that guarantees a field of view (FOV) of at least a certain angle with a reduced volume due to a limited mounting space of a large-screen AR-HUD. Another aspect of the specification is to provide a vehicle imaging device that provides different AR images within a user's field of view (FOV) by reflecting the different AR images through different regions of a windshield using a plurality of mirrors. Still another aspect of this specification is to implement continuous images related to driving-related information to have a large aspect ratio by using a single image module.

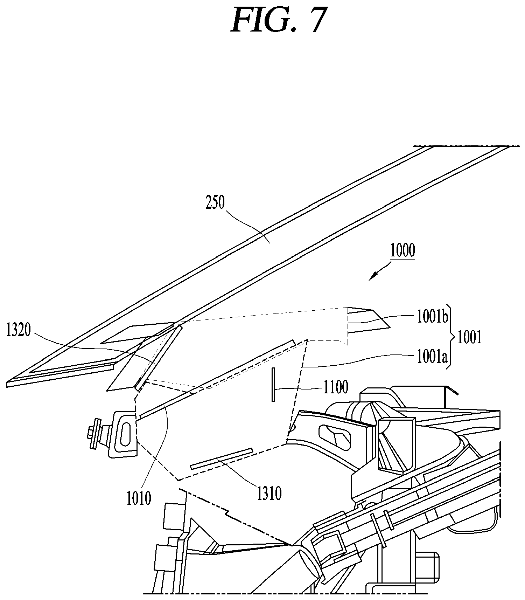

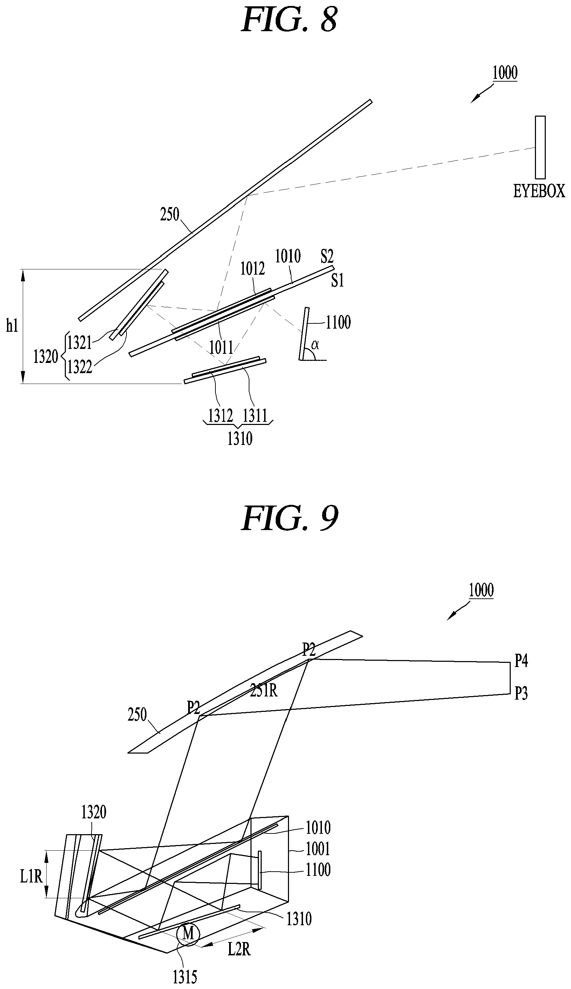

In some embodiments, FIG. 7 is a view of a vehicle imaging device according to an embodiment. FIG. 8 is a cross-sectional view of the vehicle imaging device of FIG. 7. FIG. 9 is a view of a structure in which an optical signal is reflected and transmitted through a specific region of a windshield in the vehicle imaging device of FIG. 7.

Referring to FIGS. 7 to 9, a vehicle imaging device 1000 may be configured to include a cover 1010, a picture generation unit (PGU) 1100, a mirror 1310, and a second mirror 1320. The cover 1010 may form the appearance of a dashboard 1001 of the vehicle. The PGU 1100 and the mirror 1310 may be arranged inside the cover 1010.

The mirror 1310 may be arranged in the dashboard 1001 of the vehicle. The mirror 1310 may reflect an optical signal inside the dashboard 1001.

The PGU 1100 may be arranged inside the dashboard 1001. The PGU 1100 may be arranged to generate an optical signal to one side. The PGU 1100 may include various projectors and a display that displays pixels on a screen. The PGU 1100 may be implemented as a liquid crystal display (LCD), an organic light-emitting diode (OLED), a digital light processing (DLP), a liquid crystal on silicon (LCoS), or a micro light-emitting diode (micro-LED).

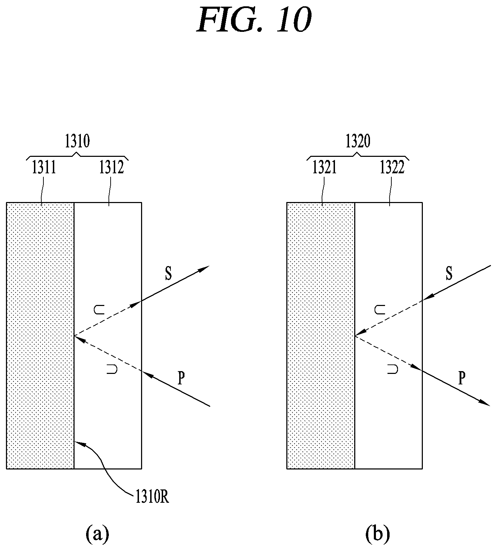

The cover 1010 may form the appearance of the dashboard 1001. The cover 1010 may include a first surface S1 and a second surface S2 that selectively reflect or transmit an optical signal depending on a polarization component of the optical signal. In some embodiments, FIG. 10 is a view of polarization components in a phase retarder attached to a plane mirror of FIG. 8 and a second phase retarder attached to a concave mirror of a second mirror.

Referring to FIGS. 7 to 10, the cover 1010 may selectively reflect or transmit an optical signal depending on a polarization state of an optical signal incident on the first or second surface S1, S2 of the cover 1010. When an optical signal has a first polarization component, the first cover 1010 may reflect the optical signal. When an optical signal has a second polarization component, the first cover 1010 may transmit the optical signal. In this regard, the first polarization component may be a P-polarization component, and the second polarization component may be an S-polarization component, but is not limited thereto, and may change depending on the application.

The second mirror 1320 may be arranged between a windshield 250 and the cover 1010 of the vehicle. The windshield 250 may be arranged on a frame of the vehicle to protect the driver from an external environment and secure visibility. The windshield 250 may reflect an optical path of an optical signal, which is formed through the PGU 1100 and a plurality of mirrors, to an eye box, so that the driver can see a virtual image.

In some embodiments, the virtual image may be an image that provides the driver with situational information as well as cluster information, and a virtual image distance and FOV may change depending on requirements. An eye box region may be a region that indicates a movement of the driver's FOV. In some embodiments, it may be necessary to adjust a height of the eye box region, which is the region indicating the movement of the driver's FOV. In some embodiments, a motor may be provided to adjust the driver's FOV height (Short / Nominal / Tall).

The second mirror 1320 may reflect an optical signal transmitted through the cover 1010 to the first surface S1 of the cover 1010. The second mirror 1320 may be formed so that the optical signal reflected from the second mirror 1320 and the first surface S1 of the cover 1010 is directed toward a first region 251R of the windshield 250.

The dashboard 1001 of the vehicle may be configured to include the second mirror 1320. In some embodiments, the dashboard 1001 may include a first region 1001a in which the PGU 1100 and the mirror 1310 are accommodated, and a second region 1001b in which the second mirror 1320 is accommodated. The cover 1010 may be formed on an upper end portion of the first region 1001a of the dashboard 1001. The second mirror 1320 may be formed in an inner region of the second region 1001b of the dashboard 1001. The inner region of the second region 1001b of the dashboard 1001 may be formed to be inclined at a certain angle so that the second mirror 1320 is arranged at a second inclination angle.

The mirror 1310 may include a plane mirror 1311 and a phase retarder 1312. The plane mirror 1311 may be formed with a flat surface to reflect the optical signal that is generated in the PGU 1100 and reflected from the first surface S1 of the cover 1010. The phase retarder 1312 may be formed on a first surface of the plane mirror 1311. The phase retarder 1312 may be configured as a phase retardation layer to retard a phase of a polarization component of an optical signal that is reflected from the first surface S1 of the cover 1010.

The mirror 1310 may be formed at a first inclination angle with respect to a horizontal plane. The second mirror 1320 may be formed at a second inclination angle with respect to the horizontal plane. The second inclination angle of the second mirror 1320 may be formed to be greater than the first inclination angle of the mirror 1310. The first inclination angle of the mirror 1310 and the second inclination angle of the second mirror 1320 may be formed to have values smaller than 90 degrees.

Even when the second inclination angle of the second mirror 1320 is greater than the first inclination angle of the mirror 1310, a second light concentration region of the second mirror 1320 may be formed smaller than a first light concentration region of the mirror 1310. A second length L2R of the second light concentration region of the second mirror 1320 may be formed to be smaller than a first length L1R of the first light concentration region of the mirror 1310. Accordingly, a second height between the cover 1010 and the second mirror 1320 may be maintained below a threshold value. Additionally, a height h1 from the bottom of the first mirror 1310 to the top of the second mirror 1320 may be maintained below a threshold height.

In some embodiments, the PGU 1100 may be arranged at a certain inclination angle α with respect to the horizontal plane. The inclination angle α of the PGU 1100 may be set to a value greater than the first inclination angle of the mirror 1310. The inclination angle α of the PGU 1100 may be set to a value greater than the second inclination angle of the second mirror 1320. The inclination angle α of the PGU 1100 may be set to a value greater than 60 degrees and smaller than 90 degrees. Accordingly, the first inclination angle of the mirror 1310, the second inclination angle of the second mirror 1320, and the inclination angle α of the PGU 1100 may be formed to have values smaller than 90 degrees.

An optical signal emitted from the PGU 1100 may be reflected from the first surface S1 of the cover 1010 rather than the mirror 1310, due to an inclination angle α of the PGU 1100 which is smaller than 90 degrees. An optical signal reflected from the first surface S1 of the cover 1010 may be incident on the mirror 1310 at an incident angle smaller than a certain angle, due to the inclination angle α of the PGU 1100 which is greater than 60 degrees. Accordingly, a first height between the cover 1010 and the mirror 1310 may be maintained below a threshold value.

The cover 1010 may be adjustable to block sunlight depending on the angle of the windshield 250 and the location of the driver's eye box region of the vehicle. The inclination angle of the cover 1010 may be a value greater than the first inclination angle of the mirror 1310 and smaller than the second inclination angle of the second mirror 1320.

The cover 1010 may include a polarization film 1011, 1012 that is arranged on the first or second surface S1, S2 to selectively transmit or reflect an optical signal depending on a polarization component of the optical signal. The cover 1010 may selectively reflect or transmit an optical signal depending on a polarization state of an optical signal incident on the first or second surface S1, S2 of the cover 1010. When an optical signal has a first polarization component, the first or second polarization film 1011, 1012 may reflect the optical signal. When an optical signal has a second polarization component, the first or second polarization film 1011, 1012 may transmit the optical signal. In this regard, the first polarization component may be P-polarization component, and the second polarization component may be S-polarization component, but is not limited thereto and may change depending on the application.

The second mirror 1320 may include a concave mirror 1321 and a second phase retarder 1322. In this regard, a vehicle imaging device implemented as an AR-HUD may have mirrors arranged inside and outside the cover 1010 to secure a large screen and virtual image distance. The mirrors arranged inside and outside the cover 1010 may increase a height of the AR-HUD, and thereby occupy the largest volume in the vehicle imaging device. However, in this specification, the concave mirror 1321 may be arranged outside the cover 1010 rather than inside, thereby reducing the volume of the vehicle imaging device 1000. In some embodiments, the concave mirror 1321 may be arranged at the front of a light trap part which is an empty space inside the vehicle, thereby reducing the volume of the vehicle imaging device 1000.

The concave mirror 1321 may have a concave surface formed so that an optical signal transmitted through the cover 1010 is reflected. The second phase retarder 1322 may be formed on a first surface of the concave mirror 1321. The second phase retarder 1322 may be configured as a phase retardation layer to retard a phase of a polarization component of an optical signal transmitted through the cover 1010 within a certain range based on 90 degrees.

In some embodiments, the first polarization film 1011 may be arranged on the first surface S1 of the cover 1010 and formed to selectively transmit or reflect an optical signal depending on a polarization component of the optical signal. The second polarization film 1012 may be arranged on the second surface S2 of the cover 1010 and formed to selectively transmit or reflect an optical signal depending on a polarization component of the optical signal.

The first polarization component emitted from the PGU 1100 may be reflected from the first polarization film 1011 and converted into a second polarization component on the phase retarder 1312 and the plane mirror 1311. The phase retarder 1312 may be implemented as a quarter-wave plate (QWP) which converts a first polarization component (e.g., P-polarization) into a first circular polarization component (e.g., a right-circular polarization). The first circular polarization component may be reflected from a reflective surface 1310R of the plane mirror 1311 and converted into a second circular polarization component (e.g., a left-circular polarization). The reflected second circular polarization component may be converted into a second polarization component (e.g., an S-polarization) while passing through the phase retarder 1312 again.

The second polarization component may be transmitted through the first polarization film 1011 and the second polarization film 1012 and converted back into the first polarization component in the second phase retarder 1322 and the concave mirror 1321. The second phase retarder 1322 may be implemented as a QWP which converts the second polarization component (e.g., an S-polarization) into a second circular polarization component (e.g., a left-circular polarization). The second circular polarization component may be reflected from a reflective surface of the concave mirror 1321 and converted into a first circular polarization component. The reflected first circular polarization component may be converted into a first polarization component (e.g., a P-polarization) while passing through the phase retarder 1312 again. The first polarization component converted into the second phase retarder 1322 may be reflected by the second polarization film 1012 and directed toward the windshield 250.

In some embodiments, the windshield 250 of the vehicle may be formed with different curvatures for each region. In this regard, the windshield 250 may be formed with different curvatures for each region to reflect an optical signal into the driver's eye box region of the vehicle so that the driver can view a virtual image. An optical signal may be a signal that is reflected from the second phase retarder 1321 of the second mirror 1320 and reflected from the first surface S1 of the cover 1010. Optical signals reflected from a first point P1 and a second point P2 of the windshield 250 of the vehicle may be formed to a third point P3 and a fourth point P4 of the eye box. A first vertical distance between the first point P1 and the second point P2 may be greater than a second vertical distance between the third point P3 and the fourth point P4.

The vehicle imaging device 1000 may further include a motor 1315 that adjusts the first inclination angle between the mirror 1310, which is the plane mirror, and the horizontal plane. The motor 1315 may be operably coupled to the plane mirror 1311. The motor 1315 may be attached to a second surface of the plane mirror 1311. The motor 1315 may be configured to adjust the first inclination angle between the mirror 1310, which is the plane mirror, and the horizontal plane. The first inclination angle adjusted by the motor 1315 may be formed smaller than the second inclination angle between the second mirror 1320 and the horizontal plane. Vertical positions of the third point P3 and the fourth point P4 may be changed by adjusting the first inclination angle by the motor 1315. Accordingly, a viewing height in the vertical direction of the eye box region may be adjusted.

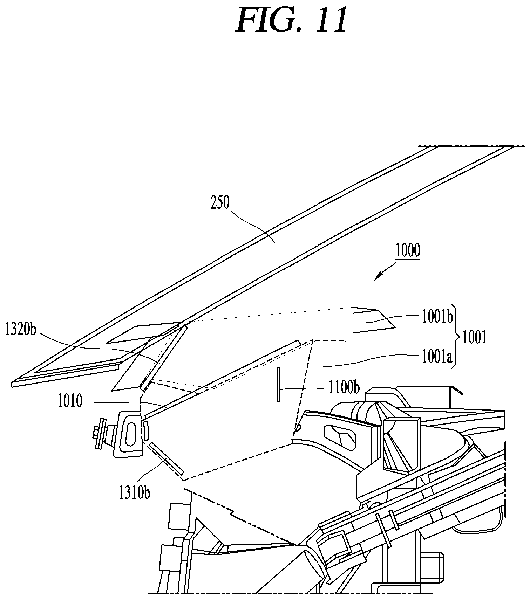

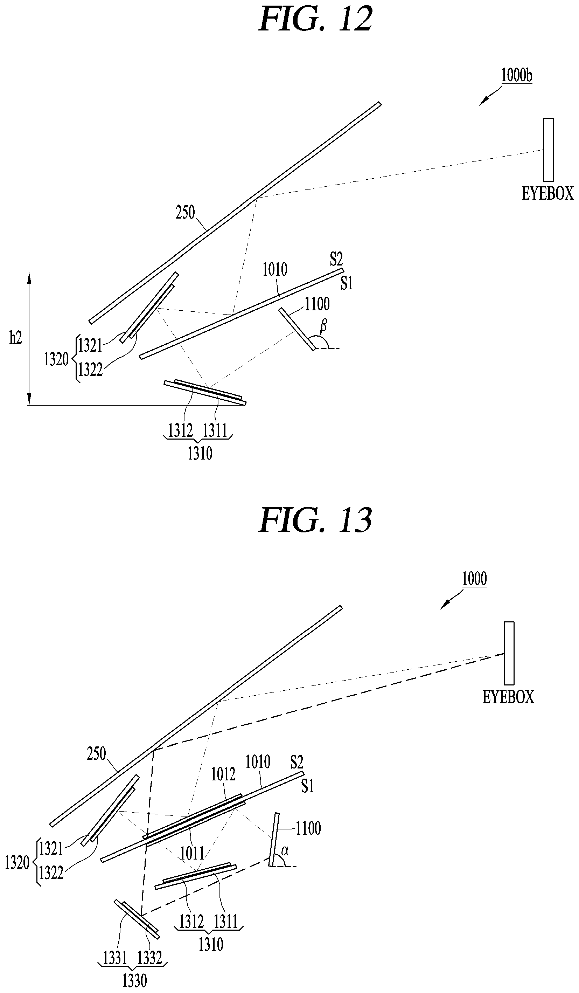

In some embodiments, in a vehicle imaging device according to another embodiment of the specification, a PGU 1100 may be arranged at an angle greater than 90 degrees with respect to the horizontal plane, and a cover 1010 may be formed of a transparent material. In some embodiments, FIG. 11 is a view of a vehicle imaging device according to an embodiment. FIG. 12 is a cross-sectional view of the vehicle imaging device of FIG. 11.

Referring to FIGS. 11 and 12, a vehicle imaging device 1000b may include a cover 1010, a picture generation unit (PGU) 1100b, a mirror 1310b, and a second mirror 1320b. The cover 1010 may form the appearance of the dashboard 1001 of the vehicle. The PGU 1100b and the mirror 1310b may be arranged inside the cover 1010.

The mirror 1310b may be arranged in the dashboard 1001 of the vehicle. The mirror 1310b may reflect an optical signal inside the dashboard 1001.

The PGU 1100b may be arranged inside the dashboard 1001. The PGU 1100b may be arranged to generate an optical signal to one side. The PGU 1100b may be implemented as LCD, OLED, DLP, LCoS, or micro-LED.

The cover 1010 may form the appearance of the dashboard 1001. The cover 1010 may include a first surface S1 and a second surface S2 that reflect or transmit an optical signal according to an incident angle. The second mirror 1320b may be arranged between the windshield 250 and the cover 1010 of the vehicle. The second mirror 1320b may reflect an optical signal transmitted through the cover 1010 to the first surface S1 of the cover 1010. The second mirror 1320b may be formed so that an optical signal reflected from the second mirror 1320b and the first surface S1 of the cover 1010 is directed toward a specific region of the windshield 250.

The dashboard 1001 of the vehicle may include the second mirror 1320b. In some embodiments, the dashboard 1001 may include a first region 1001a in which the PGU 1100b and the mirror 1310b are accommodated, and a second region 1001b in which the second mirror 1320 is accommodated. The cover 1010 may be formed on an upper end portion of the first region 1001a of the dashboard 1001. The second mirror 1320b may be formed in an inner region of the second region 1001b of the dashboard 1001. The inner region of the second region 1001b of the dashboard 1001 may be formed to be inclined at a certain angle so that the second mirror 1320b is arranged at a fourth inclination angle.

The mirror 1310b may include a plane mirror 1311b and a phase retarder 1312b. The plane mirror 1311b may be formed with a flat surface to reflect the optical signal generated in the PGU 1100b. The phase retarder 1312b may be formed on a first surface of the plane mirror 1311b. The phase retarder 1312b may be configured to retard a phase of a polarization component of an optical signal generated in the PGU 1100b.

The mirror 1310b may be formed at a third inclination angle with respect to a horizontal plane. The second mirror 1320b may be formed at a fourth inclination angle with respect to the horizontal plane. The fourth inclination angle of the second mirror 1320b may be formed to be smaller than the third inclination angle of the mirror 1310b. The third inclination angle of the mirror 1310b may be formed to have a value greater than 90 degrees. The fourth inclination angle of the second mirror 1320 may be formed to have a value smaller than 90 degrees.

In some embodiments, the PGU 1100 may be arranged at a certain inclination angle β with respect to the horizontal plane. The inclination angle β of the PGU 1100 may be set to a value smaller than the third inclination angle of the mirror 1310b. The inclination angle β of the PGU 1100 may be set to a value greater than the fourth inclination angle of the second mirror 1320. The inclination angle β of the PGU 1100 and the third inclination angle of the mirror 1310b may be set to values greater than 90 degrees.

The second mirror 1320b may include a mirror 1321b and a second phase retarder 1322b. The mirror 1321b may be arranged to reflect an optical signal transmitted through the cover 1010. The second phase retarder 1322b may be formed on a first surface of the mirror 1321b. The second phase retarder 1322b may be configured to retard a phase of a polarization component of an optical signal transmitted through the cover 1010 within a certain range based on 90 degrees.

Therefore, the vehicle imaging devices 1000 and 1000b may maximize a volume reduction effect through a multi-selective reflection/transmission optical system by using a dust cover 1010 that has been used to suppress an introduction of foreign substances.

In some embodiments, a height h2 from the bottom of the first mirror 1310b to the top of the second mirror 1320b may increase compared to a height h1 from the bottom of the first mirror 1310 to the top of the second mirror 1320 of FIG. 8. Accordingly, the vehicle imaging device 1000 may secure the degree of freedom in volume it occupies when installed inside the vehicle as the height h1 from the bottom of the first mirror 1310 to the top of the second mirror 1320 decreases. In some embodiments, compared to the vehicle imaging device 1000b, the vehicle imaging device 1000 may be reduced in volume by at least about 10%. The vehicle imaging device 1000 may have a volume reduction effect of at least 40% compared to a large-screen AR-HUD on the market. The vehicle imaging device 1000 may be implemented as an AR-HUD with a volume of about 9L or less within the vehicle.

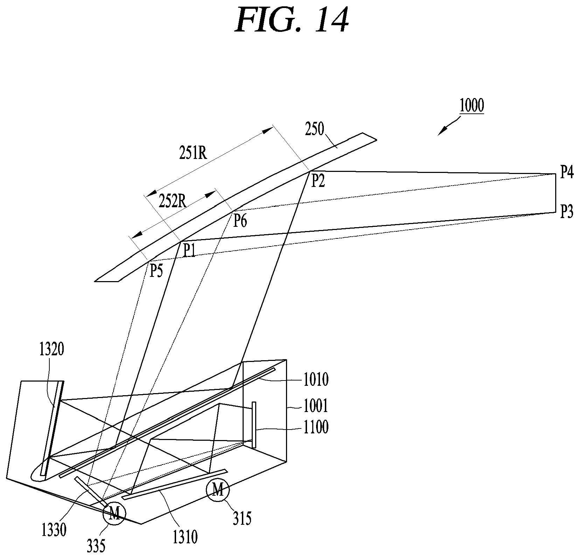

In some embodiments, the vehicle imaging device according to the specification may be configured to display a plurality of images by arranging a plurality of mirrors in the lower region of the cover. In some embodiments, FIG. 13 is a cross-sectional view of a vehicle imaging device having a structure in which two mirrors are arranged in a lower region of a cover. FIG. 14 is a view of the vehicle imaging device having the structure in which the two mirrors are arranged in the lower region of the cover, in relation to FIG. 13.

Referring to FIGS. 12 and 13, the vehicle imaging device 1000 may be configured to include a cover 1010, a PGU 1100, a panel 1310, a second mirror 1320, and a third mirror 1330. In the vehicle imaging device 1000, the mirror 1310 and the third mirror 1330 may be arranged in the lower region of the cover, to display a plurality of AR images.

The PGU 1100 may include various projectors and a display that displays pixels on a screen. The mirror 1310 implemented as the plane mirror may be formed to change an optical path of an optical signal associated with a first virtual image. The phase retarder 1311 arranged on the mirror 1310 may retard a phase of a polarization to change a linear polarization component of light reflected from the cover 1010.

A curvature of the second concave mirror 1331 arranged on the third mirror 1330 may be determined according to a magnification of a second virtual image. The second concave mirror 1331 may be an optical reflective mirror for implementing a second image. The third phase retarder 1332 arranged on the third mirror 1330 may be arranged to reflect the polarization component of the second optical signal from the display of the PGU 1100 and transmit the reflected polarization component through the cover 1010.

The cover 1010 may be configured to suppress an introduction of foreign substances. The polarization film 1011, 1012 of the cover 1010 may cause a selective transmission/reflection phenomenon depending on a polarization component of light. An angle of the cover 1010 may be adjusted to suppress sunlight from entering the eye box region depending on an angle of the windshield 250 and a location of the eye box region.

A shape of the concave mirror 1321 arranged on the second mirror 1320 may be determined according to an FOV and a magnification of a first virtual image. The phase retarder 1322 may change a polarization component by retarding a phase of a polarization of an optical signal transmitted through the cover 1010 by 90 degrees. The windshield 250 may be arranged on a frame of the vehicle to protect the driver from an external environment and secure visibility. The windshield 250 may reflect an optical path from the HUD into the eye box region, so that the driver can view a plurality of virtual images. The first virtual image may be an image that indicates direction, inter-vehicle distance, and the like, which require AR functions, and provides situational information during driving. The second virtual image may be an image that provides brief information, such as a speed shown on a cluster, with an indicator function. The eye box region may be a region that indicates a movement of the driver's FOV.

The motor 1315 may adjust an AR virtual image to correspond to the driver's FOV height (Short / Nominal / Tall). The second motor 1335 may adjust an indicator virtual image to correspond to the driver's FOV height (Short / Nominal / Tall).

Among the aforementioned technical features, in some examples, to display both the first and second virtual images in the eye box region, the third mirror 1330 may be arranged at a specific location. The third mirror 1330 may be arranged between the mirror 1310 and the second mirror 1320. The third mirror 1330 may reflect a second optical signal so that the second optical signal is directed to the second region of the windshield 250. The third mirror 1330 may be formed at a third inclination angle with respect to the horizontal plane. The third inclination angle of the third mirror 1330 may be formed to have a value greater than 90 degrees.

The second optical signal reflected from the third mirror 1330 may be formed in the eye box region. The second optical signal reflected from a fifth point P5 and a sixth point P6 of the windshield 250 may be formed to the third point P3 and the fourth point P4 of the eye box. The fifth point P5 of the windshield 250 may be formed between the first point P1 and the second point P2. The sixth point P6 of the windshield 250 may be formed lower than the second point P2. A third vertical distance between the fifth point P5 and the sixth point P6 of the windshield 250 may be formed to be shorter than the first vertical distance between the first point P1 and the second point P2.

The PGU 1100 may simultaneously emit a second optical signal through a fourth region while emitting an optical signal through a third region. The optical signal emitted through the third region of the PGU 1100 may be reflected from the mirror 1310 and the second mirror 1320 and may be incident on a first region 251R of the windshield 250. The second optical signal emitted through the fourth region of the PGU 1100 may be reflected from the third mirror 1330 and may be incident on a second region 252R of the windshield 250. The first region 252R and the second region 252R of the windshield 250 may partially overlap each other.

The third mirror 1330 may include a second concave mirror 1331 and a third phase retarder 1332. The second concave mirror 1331 may have a concave surface formed so that the second optical signal is reflected. The third phase retarder 1332 may be formed on a first surface of the second concave mirror 1331. The third phase retarder 1332 may be configured to retard a phase of a polarization component of a second optical signal.

In the first region of the PGU 1100, an optical signal may be emitted with a first polarization component. In the second region of the PGU 1100, a second optical signal may be emitted with a second polarization component. The second optical signal of the first polarization component may be converted into a first polarization component in the third phase retarder 1332 and the second concave mirror 1331. The third phase retarder 1332 may be implemented as a QWP. The first polarization component converted in the third phase retarder 1332 and the second concave mirror 1331 may be transmitted through the first polarization film 1011 and the second polarization film 1012 and directed toward the windshield 250.

The concave mirror 1321 of the second mirror 1320 and the second concave mirror 1331 of the third mirror 1330 may be formed to have different curvatures. A first curvature of the concave mirror 1321 may be determined according to an FOV and a first magnification of a first virtual image displayed in the eye box region. A second curvature of the second concave mirror 1331 may be determined differently from the first curvature depending on a second magnification of a second virtual image displayed in the eye box region.

The first virtual image may be displayed in the eye box region by the optical signal reflected from the first region of the dashboard 250. The first virtual image may display a first image and first information associated with turn signal and inter-vehicle distance display in an AR imaging manner. The second virtual image may be displayed in the eye box region by the second optical signal reflected from the second region of the dashboard 250. The second image may display a second image and second information associated with an indicator of a speed shown on the cluster of the vehicle.

In some embodiments, the vehicle imaging device 1000 may include a motor 1315 for adjusting the first inclination angle of the concave mirror 1320, and a second motor 1335 for adjusting the third inclination angle of the second concave mirror 1330. The second motor 1335 may be operably coupled with the second concave mirror 1331 of the mirror 1330. The second motor 1335 may be configured to adjust the third inclination angle between the second concave mirror 1331 and the horizontal plane. Vertical positions of the third point P3 and the fourth point P4 of the windshield 250 may be changed by adjusting the third inclination angle by the second motor 1335. Accordingly, the FOV height in the vertical direction of the eye box region may be adjusted.

Referring to FIGS. 6A to 14, the controller of the vehicle imaging device 1000 may be configured to adjust a vertical FOV height of the eye box region. The controller may detect the gaze of a user seated in the driver's seat of the vehicle. The controller may determine an area, in which regions for displaying a plurality of images displayed on the windshield 250 are arranged, based on height and viewing angle of the detected gaze. The controller may determine a specific region 251R where the center of the user's gaze is located in the regions where the plurality of images are displayed, and a predetermined distance Da of the second virtual image corresponding to the indicator. The controller may control the second virtual image corresponding to the indicator to be displayed on a specific location in the specific region 251R based on the predetermined distance Da at which the second virtual image corresponding to the indicator is to be displayed.

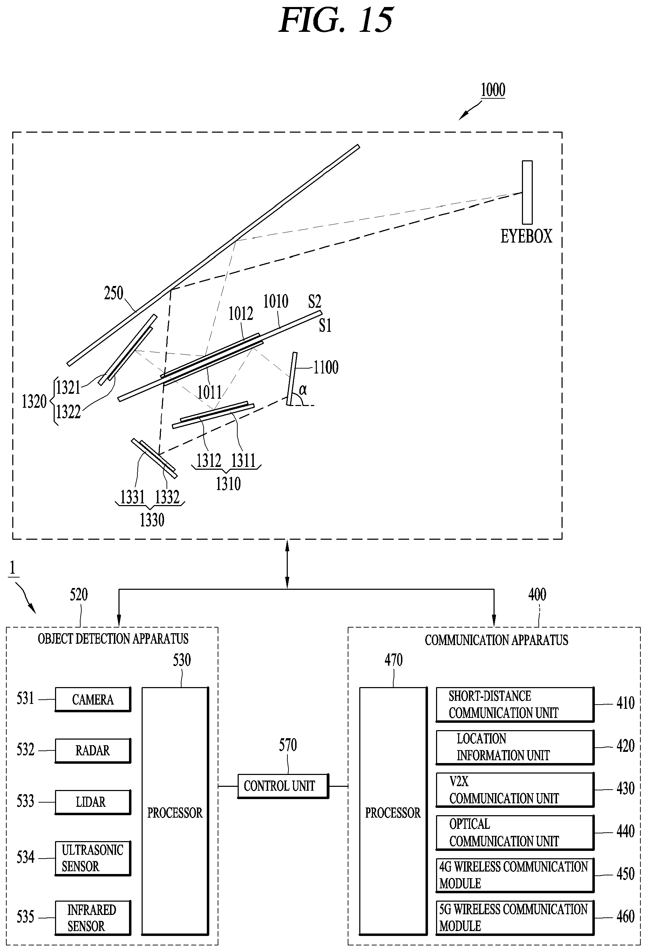

The foregoing description has been given of the vehicle imaging devices 1000 and 1000b according to one aspect of the present disclosure. Hereinafter, a vehicle including a vehicle imaging device 1000, 1000b according to another aspect of the specification will be described. All descriptions of the vehicle imaging devices 1000 and 1000b of FIGS. 6A to 14 described above and the vehicle 1 of FIGS. 1 to 5 may be applied to a vehicle including a vehicle imaging device 1000, 1000b below. In some embodiments, FIG. 15 is a block diagram of a vehicle having a vehicle imaging device according to the disclosure.

Hereinafter, a vehicle including a vehicle imaging device according to the disclosure will be described with reference to FIGS. 1 to 15. The vehicle 1 may include a windshield 250 and a vehicle imaging device 1000, 1000b. The windshield 250 may be arranged on a front surface of the vehicle 1. The vehicle imaging device 1000, 1000b may be arranged inside a dashboard 250 of the vehicle 1 and between the windshield 250 and the dashboard 1001.

The vehicle imaging device 1000, 1000b may include a PGU 1100, a cover 1010, a mirror 1310, and a second mirror 1320.

The cover 1010 may form the appearance of the dashboard 1001 of the vehicle. The PGU 1100 and the mirror 1310 may be arranged inside the cover 1010.

The mirror 1310 may be arranged in the dashboard 1001 of the vehicle. The mirror 1310 may reflect an optical signal inside the dashboard 1001.

The PGU 1100 may be arranged inside the dashboard 1001. The PGU 1100 may be arranged to generate an optical signal to one side. The PGU 1100 may be implemented as LCD, OLED, DLP, LCoS, or micro-LED.

The cover 1010 may form the appearance of the dashboard 1001. The cover 1010 may include a first surface S1 and a second surface S2 that reflect or transmit an optical signal according to an incident angle. The second mirror 1320 may be arranged between the windshield 250 and the cover 1010 of the vehicle. The second mirror 1320 may reflect an optical signal transmitted through the cover 1010 to the first surface S1 of the cover 1010. The second mirror 1320 may be formed so that the optical signal reflected from the second mirror 1320 and the first surface S1 of the cover 1010 is directed toward a first region 251R of the windshield 250.

The mirror 1310 may include a plane mirror 1311 and a phase retarder 1312. The plane mirror 1311 may be formed with a flat surface to reflect the optical signal that is generated in the PGU 1100 and reflected from the first surface S1 of the cover 1010. The phase retarder 1312 may be formed on a first surface of the plane mirror 1311. The phase retarder 1312 may be configured to retard a phase of a polarization component of an optical signal reflected from the first surface S1 of the cover 1010.

The mirror 1310 may be formed at a first inclination angle with respect to a horizontal plane. The second mirror 1320 may be formed at a second inclination angle with respect to the horizontal plane. The second inclination angle of the second mirror 1320 may be greater than the first inclination angle of the mirror 1310. The first inclination angle of the mirror 1310 and the second inclination angle of the second mirror 1320 may be formed to have values smaller than 90 degrees.

Even when the second inclination angle of the second mirror 1320 is greater than the first inclination angle of the mirror 1310, a second light concentration region of the second mirror 1320 may be formed smaller than a first light concentration region of the mirror 1310. A second length L2R of the second light concentration region of the second mirror 1320 may be formed to be smaller than a first length L1R of the first light concentration region of the mirror 1310. Accordingly, a second height between the cover 1010 and the second mirror 1320 may be maintained below a threshold value. Additionally, a height h1 from the bottom of the first mirror 1310 to the top of the second mirror 1320 may be maintained below a threshold height.

The cover 1010 may be adjustable to block sunlight depending on the angle of the windshield 250 and the location of the driver's eye box region of the vehicle. The inclination angle of the cover 1010 may be a value greater than the first inclination angle of the mirror 1310 and smaller than the second inclination angle of the second mirror 1320.

The cover 1010 may include a first surface S1 and a second surface S2 that selectively reflect or transmit an optical signal depending on a polarization component of the optical signal. The cover 1010 may include polarization film 1011, 1012 that is arranged on the first or second surface S1, S2 to selectively reflect or transmit an optical signal depending on a polarization component of the optical signal. In some embodiments, when the cover 1010 unconditionally transmits an optical signal, the volume of the vehicle imaging device may increase.

When heights of a plurality of mirrors are reduced to reduce the volume of the vehicle imaging device, it may be difficult to secure optical performance of the vehicle imaging device. This may increase an optical path difference between top and bottom of a virtual image displayed in the eye box region, making it difficult to secure the optical performance. Therefore, to overcome the volume limitation of the vehicle imaging device, a structure in which selective reflection/transmission is applied once using polarization may also be applied. However, in the structure where the selective reflection/transmission is applied once, the volume reduction effect may not be maximized, so there may still be limitations on the installation space in the vehicle.

In this regard, when an incident angle of an optical signal which is incident on the first or second surface S1, S2 of the cover 1010 is less than a predetermined angle with respect to a line perpendicular to the cover 1010, the polarization film 1011, 1012 may transmit the optical signal. When the incident angle of the optical signal incident on the first or second surface S1, S2 of the cover 1010 is at least the predetermined angle with respect to the line perpendicular to the cover 1010, the polarization film 1011, 1012 may reflect the optical signal.

The second mirror 1320 may include a concave mirror 1321 and a second phase retarder 1322. The concave mirror 1321 may have a concave surface formed so that an optical signal transmitted through the cover 1010 is reflected. The second phase retarder 1322 may be formed on a first surface of the concave mirror 1321. The second phase retarder 1322 may be configured to retard a phase of a polarization component of an optical signal transmitted through the cover 1010 within a certain range based on 90 degrees.

The vehicle imaging device 1000 may include a first polarization film 1011 and a second polarization film 1012. The first polarization film 1011 may be arranged on the first surface S1 and formed to selectively transmit or reflect an optical signal depending on a polarization component of the optical signal. The second polarization film 1012 may be arranged on the second surface S2 and formed to selectively transmit or reflect an optical signal depending on a polarization component of the optical signal.

The first polarization component emitted from the PGU 1100 may be reflected from the first polarization film 1011 and converted into a second polarization component in the phase retarder 1312 and the plane mirror 1311. The second polarization component may be transmitted through the first polarization film 1011 and the second polarization film 1012 and converted back into the first polarization component in the second phase retarder 1312 and the concave mirror 1311. The first polarization component converted in the second phase retarder 1312 and the concave mirror 1311 may be reflected by the second polarization film 1012 and directed toward the windshield 250.

This may improve the structure for reducing a volume, in which the polarization elements, such as the polarization films 1011 and 1012, are applied on opposite surfaces of the cover 1010 and the selective reflection and transmission are applied twice and once, respectively, in the vehicle imaging device 1000. The structure according to the disclosure may be advantageous in securing optical performance by reducing an optical path difference between top and bottom of an image by using the cover 1010 as a flat surface and a reflective surface.

The vehicle imaging device 1000 may include a cover 1010, a PGU 1100, a panel 1310, a second mirror 1320, and a third mirror 1330. In the vehicle imaging device 1000, the mirror 1310 and the third mirror 1330 may be arranged in the lower region of the cover, to display a plurality of AR images.

The third mirror 1330 may be arranged between the mirror 1310 and the second mirror 1320. The third mirror 1330 may reflect a second optical signal so that the second optical signal is directed to a second region of the windshield 250. The third mirror 1330 may be formed at a third inclination angle with respect to the horizontal plane. The third inclination angle of the third mirror 1330 may be formed to have a value greater than 90 degrees.

The third mirror 1330 may include a second concave mirror 1331 and a third phase retarder 1332. The second concave mirror 1331 may have a concave surface formed so that the second optical signal is reflected. The third phase retarder 1332 may be formed on a first surface of the second concave mirror 1331. The third phase retarder 1332 may be configured to retard a phase of a polarization component of the second optical signal.

In a first region of the PGU 1100, an optical signal may be emitted with a first polarization component. In a second region of the PGU 1100, a second optical signal may be emitted with a second polarization component. The second optical signal of the first polarization component may be converted into the first polarization component in the third phase retarder 1332 and the second concave mirror 1331. The third phase retarder 1332 may be implemented as a QWP. The first polarization component converted in the third phase retarder 1332 and the second concave mirror 1331 may be transmitted through the first polarization film 1011 and the second polarization film 1012 and directed toward the windshield 250.

The concave mirror 1321 of the second mirror 1320 and the second concave mirror 1331 of the third mirror 1330 may be formed to have different curvatures. A first curvature of the concave mirror 1321 may be determined according to an FOV and a first magnification of a first virtual image displayed in an eye box region. A second curvature of the second concave mirror 1331 may be determined differently from the first curvature depending on a second magnification of a second virtual image displayed in the eye box region.

The first virtual image may be displayed in the eye box region by the optical signal reflected from the first region of the dashboard 250. The first virtual image may display a first image and first information associated with turn signal and inter-vehicle distance display in an AR imaging manner. The second virtual image may be displayed in the eye box region by the second optical signal reflected from the second region of the dashboard 250. The second image may display a second image and second information associated with an indicator of a speed shown on the cluster of the vehicle.

The vehicle imaging device 1000 or the controller of the vehicle 1 may be configured to adjust a vertical FOV height of the eye box region. The controller may detect the gaze of a user seated in the driver's seat of the vehicle. The controller may determine an area, in which regions for displaying a plurality of images displayed on the windshield 250 are arranged, based on height and viewing angle of the detected gaze. The controller may determine a specific region 251R where the center of the user's gaze is located in the regions where the plurality of images are displayed, and a predetermined distance Da of the second virtual image corresponding to the indicator. The controller may control the second virtual image corresponding to the indicator to be displayed on a specific location in the specific region 251R based on the predetermined distance Da at which the second virtual image corresponding to the indicator is to be displayed. Accordingly, the position where the indicator is displayed may be updated in real time by reflecting the user's gaze height and gaze movement and a distance from a sign corresponding to the indicator to the vehicle.

So far, a vehicle imaging device having a reduced volume according to the specification and a vehicle including the same have been described. The technical features of the vehicle imaging device having the reduced volume and the vehicle including the same according to the specification will be summarized as follows, but are not limited thereto.

According to the specification, a vehicle imaging device with reduced volume may be implemented by optimally arranging a picture generation unit (PGU) and a mirror inside a cover of a dashboard and optimally arranging a second mirror outside the cover.

According to the specification, a vehicle imaging device that guarantees a field of view (FOV) of at least a certain angle while having a reduced volume according to a limited mounting space of a large-screen AR-HUD may be implemented by configuring a cover to reflect or transmit an optical signal depending on an incident angle.

According to the specification, a vehicle imaging device that ensures a field of view (FOV) of at least a certain angle while having a reduced volume according to a limited mounting space of a large-screen AR-HUD may be implemented by attaching a polarization film to at least one surface of a cover.

According to the specification, a vehicle imaging device may be implemented that provides different AR images within a user's FOV by reflecting the different AR images through different regions of a windshield using a plurality of mirrors.

According to the specification, a vehicle imaging device may be implemented such that continuous images related to driving-related information have a large aspect ratio by using a single image module.

According to the specification, a volume reduction effect may be maximized through a multi-selective reflection/transmission optical system using a cover which is used for suppressing an introduction of foreign substances.

According to the specification, the degree of freedom in volume occupied by mirrors when the mirrors are installed inside a vehicle may be secured as a height from the bottom of a first mirror to the top of a second mirror is reduced.

According to the specification, a vehicle imaging device that has a volume reduction effect of at least 40% compared to large-screen AR-HUDs on the market may be implemented.

According to the specification, a vehicle imaging device that may be implemented as an AR-HUD having a volume of about 9 L or less within a vehicle may be provided.

Effects of the specification are not limited to those effects mentioned above, and other effects not mentioned will be clearly understood by those skilled in the art from the description of the claims.

The disclosure may be implemented as computer-readable codes in a program-recorded medium. The computer-readable medium may include all types of recording devices each storing data readable by a computer system. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like. Also, the computer may include a processor or a controller. Therefore, the detailed description should not be limitedly construed in all of the aspects, and should be understood to be illustrative. The scope of the disclosure should be determined by reasonable interpretation of the appended claims and all changes that come within the equivalent scope of the disclosure are included in the scope of the disclosure.

## Claims

1. A vehicle imaging device comprising:
a mirror arranged inside a dashboard of a vehicle, and configured to reflect an optical signal inside the dashboard;
a picture generation unit (PGU) arranged inside the dashboard and configured to generate the optical signal to one side;
a cover forming appearance of the dashboard and comprising a first surface and a second surface selectively reflecting or transmitting the optical signal depending on a polarization component of the optical signal; and
a second mirror arranged between a windshield of the vehicle and the cover, and configured to reflect an optical signal transmitted through the cover to the first surface of the cover so that the optical signal is directed to a first region of the windshield.

2. The vehicle imaging device of claim 1, wherein the mirror comprises:
a plane mirror formed on the PGU and having a flat surface formed to reflect the optical signal reflected from the first surface of the cover; and
a phase retarder formed on a first surface of the plane mirror and configured to retard a phase of a polarization component of the optical signal.

3. The vehicle imaging device of claim 2, wherein the second mirror comprises:
a concave mirror having a surface formed concavely to reflect the optical signal transmitted through the first surface of the mirror; and
a second phase retarder formed on a first surface of the concave mirror and configured to retard a phase of a polarization component of the optical signal within a predetermined range with respect to 90 degrees.

4. The vehicle imaging device of claim 3, wherein the cover comprises:
a first polarization film arranged on the first surface and configured to selectively transmit or reflect the optical signal according to the polarization component of the optical signal; and
a second polarization film arranged on the second surface configured to selectively transmit or reflect the optical signal according to the polarization component of the optical signal,
a first polarization component emitted from the PGU is reflected from the first polarization film and converted into a second polarization component in the phase retarder and the plane mirror,
the second polarization component is transmitted through the first polarization film and the second polarization film and converted into the first polarization component in the second phase retarder and the concave mirror, and
the first polarization component converted in the second phase retarder and the concave mirror is reflected from the second polarization film to be directed toward the windshield.

5. The vehicle imaging device of claim 3, wherein the mirror is formed at a first inclination angle with respect to a horizontal plane, the second mirror is formed at a second inclination angle with respect to the horizontal plane, and the PGU is formed at a certain inclination angle with respect to the horizontal plane,
the second inclination angle is formed greater than the first inclination angle,
the inclination angle of the PGU is set to a value greater than the first inclination angle and the second inclination angle, and
the first inclination angle, the second inclination angle, and the inclination angle of the PGU have values smaller than 90 degrees.

6. The vehicle imaging device of claim 5, wherein the cover is adjustable to suppress sunlight from entering depending on an angle of the windshield and a location of a driver's eye box region of the vehicle, and
an inclination angle of the cover is formed to have a value greater than the first inclination angle and smaller than the second inclination angle.

7. The vehicle imaging device of claim 6, wherein the windshield is formed with different curvatures for each region such that the optical signal, which has been reflected from the second phase retarder of the second mirror and reflected from the first surface of the cover, is reflected into the eye box region of the driver of the vehicle to allow the driver to see a virtual image,
the optical signal reflected from first and second points of the windshield is formed at third and fourth points of the eye box, and
a first vertical distance between the first point and the second point is formed to be greater than a second vertical distance between the third point and the fourth point.

8. The vehicle imaging device of claim 7, further comprising
a motor operably coupled to the plane mirror and configured to adjust the first inclination angle between the plane mirror and the horizontal plane,
wherein the first inclination angle is adjusted by the motor to change vertical positions of the third point and the fourth point, and adjust a vertical field of view (FOV) height of the eye box region.

9. The vehicle imaging device of claim 8, further comprising
a third mirror arranged between the mirror and the second mirror and configured to reflect a second optical signal to be directed toward a second region of the windshield,
wherein the third mirror is formed at a third inclination angle with respect to the horizontal plane, and
the third inclination angle has a value greater than 90 degrees.

10. The vehicle imaging device of claim 9, wherein the second optical signal reflected from fifth and sixth points of the windshield is formed at the third and fourth points of the eye box,
the fifth point is formed between the first point and the second point, and the sixth point is formed lower than the second point, and
a third vertical distance between the fifth point and the sixth point is formed to be smaller than the first vertical distance between the first point and the second point.

11. The vehicle imaging device of claim 9, wherein the PGU emits the second optical signal through a fourth region while emitting the optical signal through a third region,
the optical signal is reflected from the mirror and the second mirror to be incident on the first region of the windshield, and
the second optical signal is reflected from the third mirror to be incident on the second region of the windshield.

12. The vehicle imaging device of claim 11, wherein the third mirror comprises:
a second concave mirror having a concave surface formed to reflect the second optical signal; and
a third phase retarder formed on a first surface of the second concave mirror and configured to retard a phase of a polarization component of the second optical signal,
the optical signal is emitted with a first polarization component in the third region of the PGU,
the second optical signal is emitted with a second polarization component in the fourth region of the PGU,
the second optical signal of the second polarization component is converted into the first polarization component in the third phase retarder and the second concave mirror, and
the converted first polarization component is transmitted through the first polarization film and the second polarization film and directed toward the windshield.

13. The vehicle imaging device of claim 12, wherein a first curvature of the concave mirror is determined according to an FOV and a first magnification of a first virtual image displayed in the eye box region, and
a second curvature of the second concave mirror is determined differently from the first curvature depending on a second magnification of a second virtual image displayed in the eye box region.

14. The vehicle imaging device of claim 13, wherein the first virtual image displays a first image and first information associated with turn signal and inter-vehicle distance display in an augmented reality (AR) imaging, and
the second virtual image displays a second image and second information associated with an indicator of a speed shown on a cluster of the vehicle.

15. The vehicle imaging device of claim 13, further comprising
a second motor operably coupled to the second concave mirror and configured to adjust the third inclination angle between the second concave mirror and the horizontal plane,
wherein the third inclination angle is adjusted by the second motor to change vertical positions of the third point and the fourth point, and adjust a vertical FOV height of the eye box region.

16. A vehicle comprising:
a windshield arranged on a front surface of the vehicle; and
a vehicle imaging device arranged inside a dashboard of the vehicle and between the windshield and the dashboard,
wherein the vehicle imaging device comprises:
a mirror arranged inside a dashboard of a vehicle, and configured to reflect an optical signal inside the dashboard;
a picture generation unit (PGU) arranged inside the dashboard and configured to generate the optical signal to one side;
a cover forming appearance of the dashboard and comprising a first surface and a second surface selectively reflecting or transmitting the optical signal depending on a polarization component of the optical signal; and
a second mirror arranged between the windshield of the vehicle and the cover, and configured to reflect an optical signal transmitted through the cover to the first surface of the cover so that the optical signal is directed to a first region of the windshield.

17. The vehicle imaging device of claim 16, wherein the mirror comprises:
a plane mirror formed on the PGU and having a flat surface formed to reflect the optical signal reflected from the first surface of the cover; and
a phase retarder formed on a first surface of the plane mirror and configured to retard a phase of a polarization component of the optical
the second mirror comprises:
a concave mirror having a surface formed concavely to reflect the optical signal transmitted through the first surface of the mirror; and
a second phase retarder formed on a first surface of the concave mirror and configured to retard a phase of a polarization component of the optical signal within a predetermined range with respect to 90 degrees.

18. The vehicle imaging device of claim 17, wherein the cover comprises:
a first polarization film arranged on the first surface and configured to selectively transmit or reflect the optical signal according to the polarization component of the optical signal; and
a second polarization film arranged on the second surface configured to selectively transmit or reflect the optical signal according to the polarization component of the optical signal,
a first polarization component emitted from the PGU is reflected from the first polarization film and converted into a second polarization component by the phase retarder and the plane mirror,
the second polarization component is transmitted through the first polarization film and the second polarization film and converted into the first polarization component in the second phase retarder and the concave mirror, and
the first polarization component converted in the second phase retarder and the concave mirror is reflected from the second polarization film to be directed toward the windshield.

19. The vehicle imaging device of claim 18, further comprising
a third mirror arranged between the mirror and the second mirror and configured to reflect a second optical signal to be directed toward a second region of the windshield,
the third mirror is formed at a third inclination angle with respect to the horizontal plane, and the third inclination angle has a value greater than 90 degrees.

20. The vehicle imaging device of claim 19, wherein the third mirror comprises:
a second concave mirror having a concave surface formed to reflect the second optical signal; and
a third phase retarder formed on a first surface of the second concave mirror and configured to retard a phase of a polarization component of the second optical signal,
the optical signal is emitted with a first polarization component in the third region of the PGU,
the second optical signal is emitted with a second polarization component in the fourth region of the PGU,
the second optical signal of the second polarization component is converted into the first polarization component in the third phase retarder and the second concave mirror,
the converted first polarization component is transmitted through the first polarization film and the second polarization film and directed toward the windshield,
a first curvature of the concave mirror is determined according to an FOV and a first magnification of a first virtual image displayed in the eye box region, and
a second curvature of the second concave mirror is determined differently from the first curvature depending on a second magnification of a second virtual image displayed in the eye box region.
